# EUROPEAN PATENT SPECIFICATION

(11) **EP 3 904 257 B1**
(45) Date of publication and mention of the grant of the patent: **09.07.2025**
(21) Application number: 20172439.0
(22) Date of filing: 30.04.2020
(51) Int. Cl.: B66B 1/34

(54) **ELEVATOR COMMUNICATION SYSTEM AND METHOD FOR SETTING UP SUCH ELEVATOR COMMUNICATION SYSTEM**
AUFZUGSKOMMUNIKATIONSSYSTEM UND VERFAHREN ZUM EINRICHTEN EINES SOLCHEN AUFZUGSKOMMUNIKATIONSSYSTEMS
SYSTÈME DE COMMUNICATION D'ASCENSEUR ET PROCÉDÉ DE CONFIGURATION D'UN TEL SYSTÈME DE COMMUNICATION

(43) Date of publication of application: 03.11.2021
(73) Proprietor: KONE Corporation, 00330 Helsinki (FI)
(72) Inventor: Kattainen, Ari, 00330 Helsinki (FI); Aitamurto, Juha-Matti, 00330 Helsinki (FI); Huszak, Gergely, 00330 Helsinki (FI)
(74) Representative: Papula Oy

(56) References cited:
- EP-A1- 3 015 412
- EP-A1- 3 187 448
- US-A1- 2011 302 466
- "IEEE 802.3cg 10 Mb/s Single Twisted Pair Ethernet CHARLOTTE: ELEVATOR/ESCALATOR USE CASE, TOPOLOGY AND FAILURE MODES", vol. 802.3cg, 13 September 2017 (2017-09-13), pages 1 - 21, XP068120939, Retrieved from the Internet <URL:grouper.ieee.org/groups/802/3/cg/public/Sept2017/huszak_3cg_01a_0917.pdf> [retrieved on 20170913]
- "IEEE 802.3cg 10 Mb/s Single Twisted Pair Ethernet ELEVATOR/ESCALATOR USE CASE", vol. 802.3cg, 29 August 2017 (2017-08-29), pages 1 - 15, XP068120862, Retrieved from the Internet <URL:https://www.ieee802.org/3/cg/public/Sept2017/huszak_3cg_01a_0917.pdf> [retrieved on 20170829]

## Description

### TECHNICAL FIELD

The present application relates to the field of elevator communication systems.

### BACKGROUND

In modern elevator system, more and more data is sent and received by different entities of an elevator system. For example, an elevator controller may receive information from call buttons and then control an elevator drive to serve calls, or the elevator controller may receive information from a safety circuit and then based on this information control one or more entities of the elevator system. These are only some possible examples of situations where information is received and/or sent within an elevator system.

It is characteristic for the modern elevator systems that an elevator system may comprise multiple different internal data transmission solutions. This may mean that multiple different communication stacks and multiple different physical layers may be used simultaneously. The use of multiple different internal data transmission solutions may result in a complicated and inefficient solution.

Thus, it would be beneficial to have a solution that would alleviate at least one of these drawbacks. The European patent application EP3 015 412 A1 discloses a particular method for setting up an elevator communication system.

### SUMMARY

According to a first aspect of the present invention, there is provided a method for setting up an elevator communication system comprising an ethernet bus; a controller communicatively connected to the ethernet bus and being configured to communicate via the ethernet bus; a plurality of elevator system nodes communicatively connected to the ethernet bus and being configured to communicate via the ethernet bus, wherein each elevator system node is associated with a respective landing; a landing multi-drop or point-to-point ethernet bus segment at each landing, the landing multi-drop or point-to-point ethernet bus segment being connected to the elevator system node associated with the landing; and landing nodes at each landing connected to a respective landing multi-drop or point-to-point ethernet bus segment, wherein the landing node comprises one of a display, a destination call panel, a car call button, a safety contact, a voice intercom system, and a camera. Each elevator system node of the plurality of elevator system nodes is provided with a connecting unit to enable communication between the ethernet bus and the respective landing multi-drop or point-to-point ethernet bus segment. The method comprises connecting a landing node to an elevator system node via a respective landing multi-drop or point-to-point ethernet bus segment; communicating, by the elevator system node, identification data of the landing node to the controller; generating, by the controller, configuration data based on the identification data; transmitting, by the controller, the configuration data to the elevator system node; and transmitting, by the elevator system node, the configuration data to the landing node to set up the landing node.

In an implementation form of the first aspect, the ethernet bus comprises a plurality of point to point ethernet bus segments linked together with at least one repeating element.

In an implementation form of the first aspect, the method further comprises communicating, from the elevator system node, operational characteristics and a physical address of the landing node or a component associated with the landing node to the controller.

According to a second aspect of the present invention, there is provided an elevator communication system, comprising an ethernet bus; a controller communicatively connected to the ethernet bus and being configured to communicate via the ethernet bus; a plurality of elevator system nodes communicatively connected to the ethernet bus and being configured to communicate via the ethernet bus, wherein each elevator system node is associated with a respective landing; a landing multi-drop or point-to-point ethernet bus segment at each landing, the landing multi-drop or point-to-point ethernet bus segment being connected to the elevator system node associated with the landing; and landing nodes at each landing connected to a respective landing multi-drop or point-to-point ethernet bus segment, wherein the landing node comprises one of a display, a destination call panel, a car call button, a safety contact, a voice intercom system, and a camera. Each elevator system node of the plurality of elevator system nodes is provided with a connecting unit to enable communication between the ethernet bus and the respective landing multi-drop or point-to-point ethernet bus segment. The elevator system node is configured to communicate to the controller identification data of a landing node connected to the elevator system node. The controller is configured to generate configuration data based on the identification data and to transmit the configuration data to the elevator system node, and the elevator system node is configured to transmit the configuration data to set up the landing node.

In an implementation form of the second aspect, the ethernet bus comprises a plurality of point to point ethernet bus segments linked together with at least one repeating element.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1A** illustrates an elevator communication system according to an example embodiment.
**FIG. 1B** illustrates an elevator communication system according to another example embodiment.
**FIG. 1C** illustrates an elevator communication system according to another example embodiment.
**FIG. 1D** illustrates an elevator communication system according to another example embodiment.
**FIG. 2** illustrates a method for introducing a new elevator system component to an elevator control system comprising an ethernet bus according to an example embodiment.
**FIGS. 3A and 3B** illustrate examples of adding a new elevator system component to an elevator control system according to an example embodiment.

### DETAILED DESCRIPTION

The following description illustrates an ethernet bus based elevator communication system. In the illustrated solution each elevator system node associated with a landing and connected to the ethernet bus is provided with a connecting unit, for example, a switch to enable communication between the ethernet bus and a respective landing bus segment. The illustrated solution may enable, for example, a scalable system in which new landing bus nodes can be added easily and quickly to the elevator communication system, thus providing a simple and efficient solution.

In an example embodiment, the various embodiments discussed below may be used in an elevator system comprising an elevator that is suitable and may be used for transferring passengers between landing floors of a building in response to service requests. In another example embodiment, the various embodiments discussed below may be used in an elevator system comprising an elevator that is suitable and may be used for automated transferring of passengers between landings in response to service requests.

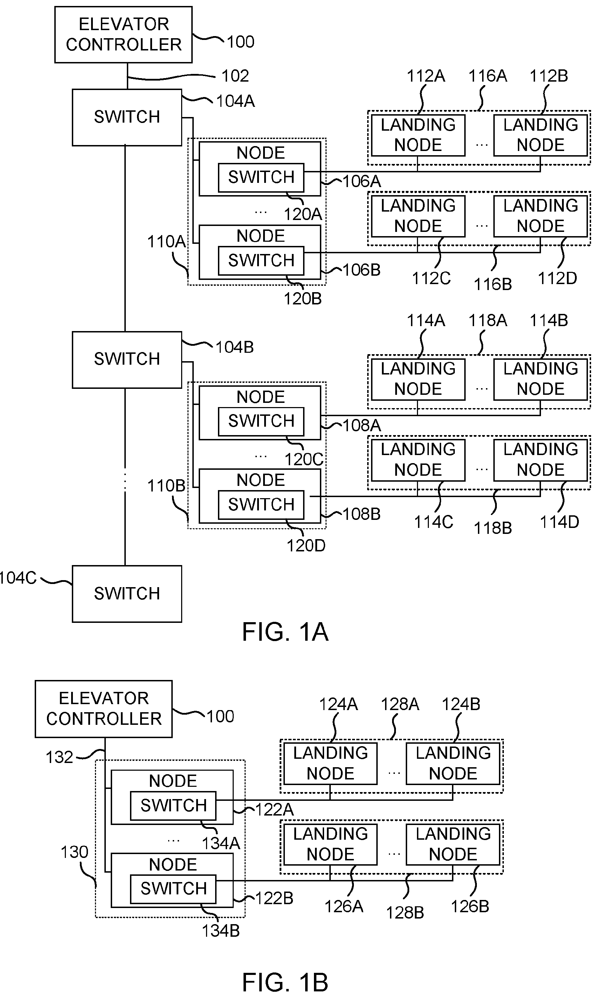

FIG. 1A illustrates an elevator communication system according to an example embodiment. The elevator communication system comprises an ethernet bus 102 and a controller 100, for example, an elevator controller, communicatively connected to the ethernet bus 102 and being configured to communicate via the ethernet bus 102. The system may further comprise a plurality of elevator system nodes 106A, 106B 108A, 108B communicatively connected to the ethernet bus 102 and being configured to communicate via the ethernet bus 102. Each elevator system node 106A, 106B, 108A, 108B is associated with a respective landing. i.e. a floor. The elevator system nodes 106A, 106B may form a first multi-drop ethernet bus segment 110A and the elevator system nodes 108A, 108B may form a second multi-drop ethernet bus segment 110B. The elevator communication system may comprise one or more communication units 104A, 104B, 104C, for example, switches, hubs or routers, that are used to implement the ethernet bus 102. The ethernet bus 102 may be a point-to-point ethernet bus, for example, 100BASE-TX or 10BASET1L point-to-point ethernet bus.

The elevator communication system may further comprise a landing bus segment 116A, 116B, 118A, 118B at each landing, the landing bus segment 116A, 116B, 118A, 118B being connected to the elevator system node 106A, 106B, 108A, 108B associated with the landing. The landing bus segment 116A, 116B, 118A, 118B may comprise, for example, a multi-drop ethernet bus segment. The multi-drop ethernet bus segment may comprise, for example, 10BASE-T1S multi-drop ethernet bus. One or more landing nodes 112A, 112B, 112C, 112D, 114A, 114B, 114C, 114D may be connected to each landing bus segment 116A, 116B, 118A, 118B. Each elevator system node 106A, 106B, 108A, 108B may be provided with a switch 120A, 120B, 120C, 120D to enable communication between the ethernet bus 102 and the respective landing bus segment 116A, 116B, 118A, 118B. The landing node 112A, 112B, 112C, 112D, 114A, 114B, 114C, 114D may comprise, for example, one of a display, a destination call panel, a car call button, a safety contact, a voice intercom system, and a camera.

FIG. 1B illustrates an elevator communication system according to another example embodiment. The elevator communication system comprises an ethernet bus 132 and a controller 100, for example, an elevator controller, communicatively connected to the ethernet bus 132 and being configured to communicate via the ethernet bus 132. The ethernet bus 132 comprise, for example, 10BASE-T1S multi-drop ethernet bus. The system may further comprise a plurality of elevator system nodes 122A, 122B communicatively connected to the ethernet bus 132 and being configured to communicate via the ethernet bus 132. Each elevator system node 122A, 122B is associated with a respective landing. i.e. a floor. The elevator system nodes 122A, 122B may form a multi-drop ethernet bus segment 130 connected to the controller 100. The multi-drop ethernet bus segment 130 may comprise, for example, 10BASE-T1S multi-drop ethernet bus.

The elevator communication system may further comprise a landing bus segment 128A, 128B at each landing, the landing bus segment 128A, 128B being connected to the elevator system node 122A, 122B associated with the landing. The landing bus segment 128A, 128B may comprise, for example, a multi-drop ethernet bus segment. One or more landing nodes 124A, 124B, 126A, 126B may be connected to each landing bus segment 128A, 128B. Each elevator system node 122A, 122B may be provided with a connecting unit, for example, a switch 134A, 134B to enable communication between the ethernet bus 132 and the respective landing bus segment 128A, 128B. The landing node 124A, 124B, 126A, 126B may comprise, for example, one of a display, a destination call panel, a car call button, a safety contact, a voice intercom system, and a camera.

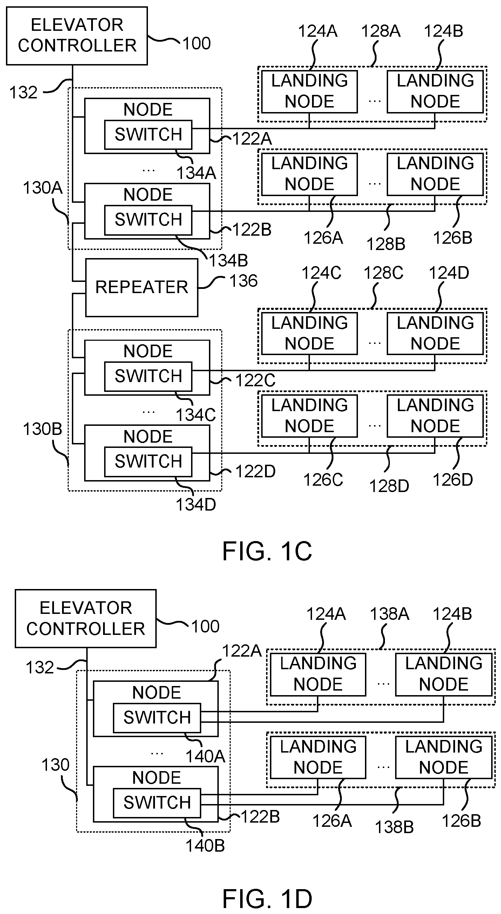

FIG. 1C illustrates an elevator communication system according to another example embodiment. The elevator communication system comprises an ethernet bus 132 and a controller 100, for example, an elevator controller, communicatively connected to the ethernet bus 132 and being configured to communicate via the ethernet bus 132. The ethernet bus 132 comprise, for example, 10BASE-T1S multi-drop ethernet bus. The system may further comprise a plurality of elevator system nodes 122A, 122B, 122C, 122D communicatively connected to the ethernet bus 132 and being configured to communicate via the ethernet bus 132. Each elevator system node 122A, 122B, 122C, 122D is associated with a respective landing. i.e. a floor. The elevator system nodes 122A, 122B may form a first multi-drop ethernet bus segment 130A and the elevator system nodes 122C, 122D may form a second multi-drop ethernet bus segment 130B. A repeating element 136, for example, a T1L-T1L hub, may be arranged between two elevator system nodes. The use of the repeating element 136 enables an easy and simply way to build an ethernet based communication system.

The elevator communication system may further comprise a landing bus segment 128A, 128B, 128C, 128D at each landing, the landing bus segment 128A, 128B, 128C, 128D being connected to the elevator system node 122A, 122B, 122C, 122D associated with the landing. The landing bus segment 128A, 128B, 128C, 128D may comprise, for example, a multi-drop ethernet bus segment. One or more landing nodes 124A, 124B, 124C, 124D, 126A, 126B, 126C, 126D may be connected to each landing bus segment 128A, 128B, 128C, 128D. Each elevator system node 122A, 122B, 122C, 122D may be provided with a connecting unit, for example, a switch 134A, 134B, 134C, 134D to enable communication between the ethernet bus 132 and the respective landing bus segment 128A, 128B, 128C, 128D. The landing node 124A, 124B, 124C, 124D, 126A, 126B, 126C, 126D may comprise, for example, one of a display, a destination call panel, a car call button, a safety contact, a voice intercom system, and a camera. The multi-drop ethernet bus segment 128A-128C may comprise, for example, 10BASE-T1S multi-drop ethernet bus.

FIG. 1D illustrates an elevator communication system according to another example embodiment. The elevator communication system comprises an ethernet bus 132 and a controller 100, for example, an elevator controller, communicatively connected to the ethernet bus 132 and being configured to communicate via the ethernet bus 132. The ethernet bus 132 comprise, for example, 10BASE-T1S multi-drop ethernet bus. The system may further comprise a plurality of elevator system nodes 122A, 122B communicatively connected to the ethernet bus 132 and being configured to communicate via the ethernet bus 132. Each elevator system node 122A, 122B is associated with a respective landing. i.e. a floor. The elevator system nodes 122A, 122B may form a multi-drop ethernet bus segment 130 connected to the controller 100. Instead of using the multi-drop ethernet bus segment, the elevator system nodes may be configured to be connected to a point to point ether bus.

The elevator communication system may further comprise a landing bus segment 138A, 138B at each landing. One or more landing nodes 124A, 124B, 126A, 126B may be connected to each landing bus segment 138A, 138B. Each landing node 124A, 124B, 126A, 126B of the landing bus segments 138A, 138B may be separately connected to the respective elevator system node 122A, 122B associated with the landing. The landing bus segment 128A, 128B may comprise, for example, a multi-drop ethernet bus segment. Each elevator system node 122A, 122B may be provided with a connecting unit, for example, a switch 140A, 140B to enable communication between the ethernet bus 132 and the respective landing bus segment 138A, 138B. The landing node 124A, 124B, 126A, 126B may comprise, for example, one of a display, a destination call panel, a car call button, a safety contact, a voice intercom system, and a camera. The multi-drop ethernet bus segment 128A-128C may comprise, for example, 10BASE-T1S multi-drop ethernet bus.

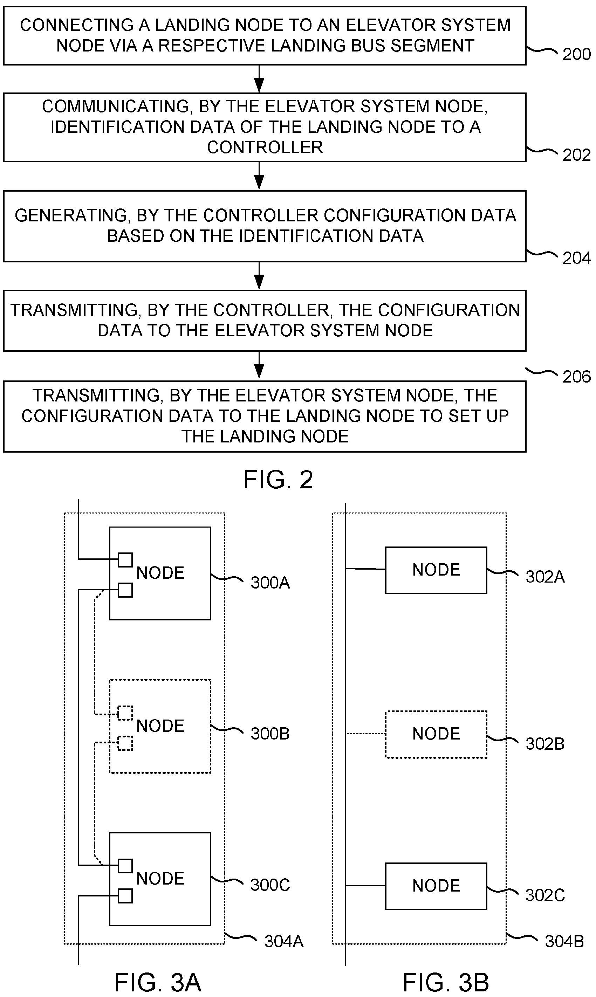

FIG. 2 illustrates a method for setting up an elevator communication system. The elevator communication system comprises an ethernet bus, a controller communicatively connected to the ethernet bus and being configured to communicate via the ethernet bus, a plurality of elevator system nodes communicatively connected to the ethernet bus and being configured to communicate via the ethernet bus, wherein each elevator system node is associated with a respective landing, a landing bus segment at each landing, the landing bus segment being connected to the elevator system node associated with the landing, landing nodes at each landing connected to a respective landing bus segment, wherein each elevator system node of the plurality of elevator system nodes is provided with a connecting unit to enable communication between the ethernet bus and the respective landing bus segment. The physical implementation of the elevator communication system may be any of the ones illustrated in FIGS. 1A-1D.

At 200, a new landing node may be connected to an elevator system node via a respective landing bus segment. As illustrated in FIGS. 1A-1D, the landing bus may comprise a multi-drop ethernet bus or a point to point ethernet bus. The landing may comprise, for example, a display, a destination call panel, a car call button, a safety contact, a voice intercom system, and a camera.

At 202 identification data of the landing node is communicated by the elevator system node to a controller. The controller may comprise, for example, an elevator controller, a configuration controller, a cloud-based controller etc. In an example embodiment, operational characteristics and a physical address of the landing node or a component associated with the landing node may be communicated by the elevator system bus node to the controller. The landing node or the component may contain information of its features, characteristics and possibilities. This may be communicated to the controller via the elevator system node. Control tasks of the controller may be assigned based on the communicated information. Further, a physical location of the landing node/connected components may be solved. Further, when a message is sent from the landing node to the controller, switches and routers will automatically provide address information such that a network address of the sender will be known when message is received by a receiver.

At 204, configuration data is generated by the controller based on the identification data. The configuration data may be generated with the controller, for example, based on the operational characteristics and the physical address of the new elevator system component or landing node.

At 206 the configuration data is transmitted by the controller to the elevator system node.

At 208 the configuration data is transmitted by the elevator system node to the landing node to set up the landing node. After the configuration, the new landing node is able to communicate with the controller using the ethernet protocol. The illustrated solution may enable a solution in which, when a new elevator system component or a landing node is added to the system, it can be configured easily and in a very scalable way.

FIGS. 3A and 3B illustrate examples of adding a new elevator system component or a node to an elevator control system according to an example embodiment.

FIG. 3A illustrates an example in which a new elevator system component, for example, a display, a destination call panel, a car call button, a safety contact, a voice intercom system, and a camera, is connected to a landing bus segment 304A via a new landing node 300B. In the simplified example, two landing nodes 300A, 300C were already connected to the landing bus segment 304A. In this example, the physical connection between the landing node is a two-connector solution such that a first connector of a node is connected to a previous landing node and a second connector of the landing node is connected to a subsequent landing node. The addition of the new landing node 300B is easy and can be made by placing the new landing node 300B between two existing landing nodes 300A, 300C and adjusting the wiring.

FIG. 3B illustrates an example in which a new elevator system component, for example, a display, a destination call panel, a car call button, a safety contact, a voice intercom system, and a camera, is connected to a landing bus segment 304B via a new landing node 302B. The landing bus segment 304B is implemented so that it enables an addition of a new landing node 302B without changing wiring of the already existing landing nodes 302A, 302C.

At least some of the above discussed example embodiments may enable transmission of any device data seamlessly between elevator system devices and any other device or system. Further, a common protocol stack may be used for all communication. At least some of the above discussed example embodiments may also enable a solution that provides high security and/or is easily expandable.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, nonvolatile media, volatile media, transmission media, and the like.

While there have been shown and described and pointed out fundamental novel features as applied to preferred embodiments thereof, it will be understood that various omissions and substitutions and changes in the form and details of the devices and methods described may be made by those skilled in the art without departing from the scope of the appended claims. For example, it is expressly intended that all combinations of those elements and/or method steps which perform substantially the same function in substantially the same way to achieve the same results are within the scope of the appended claims.

## Claims

1. A method for setting up an elevator communication system comprising
an ethernet bus (102, 132);
a controller (100) communicatively connected to the ethernet bus (102, 132) and being configured to communicate via the ethernet bus (102, 132);
a plurality of elevator system nodes (106A, 106B, 108A, 108B, 122A, 122B, 122C, 122D) communicatively connected to the ethernet bus (102, 132) and being configured to communicate via the ethernet bus (102, 132), wherein each elevator system node (106A, 106B, 108A, 108B, 122A, 122B, 122C, 122D) is associated with a respective landing;
a landing multi-drop or point-to-point ethernet bus segment (116A, 116B, 118A, 118B, 128A, 128B, 128C, 128D, 138A, 138B) at each landing, the landing multi-drop or point-to-point ethernet bus segment (116A, 116B, 118A, 118B, 128A, 128B, 128C, 128D, 138A, 138B) being connected to the elevator system node (106A, 106B, 108A, 108B, 122A, 122B, 122C, 122D) associated with the landing;
landing nodes (114A, 114B, 114C, 114D, 124A, 124B, 126A, 126B, 126C, 126D) at each landing connected to a respective landing multi-drop or point-to-point ethernet bus segment (116A, 116B, 118A, 118B, 128A, 128B, 128C, 128D, 138A, 138B), wherein the landing node (114A, 114B, 114C, 114D, 124A, 124B, 126A, 126B, 126C, 126D) comprises one of a display, a destination call panel, a car call button, a safety contact, a voice intercom system, and a camera;
wherein each elevator system node of the plurality of elevator system nodes (106A, 106B, 108A, 108B, 122A, 122B, 122C, 122D) is provided with a connecting unit (120A-120D, 134A, 134D, 140A, 140B) to enable communication between the ethernet bus (102, 132) and the respective landing multi-drop or point-to-point ethernet bus segment (116A, 116B, 118A, 118B, 128A, 128B, 128C, 128D, 138A, 138B),
wherein the method comprises:
connecting a landing node (114A, 114B, 114C, 114D, 124A, 124B, 126A, 126B, 126C, 126D) to an elevator system node (106A, 106B, 108A, 108B, 122A, 122B, 122C, 122D) via a respective landing multi-drop or point-to-point ethernet bus segment (116A, 116B, 118A, 118B, 128A, 128B, 128C, 128D, 138A, 138B);
communicating, by the elevator system node (106A, 106B, 108A, 108B, 122A, 122B, 122C, 122D), identification data of the landing node (114A, 114B, 114C, 114D, 124A, 124B, 126A, 126B, 126C, 126D) to the controller (100);
generating, by the controller (100), configuration data based on the identification data;
transmitting, by the controller (100), the configuration data to the elevator system node (106A, 106B, 108A, 108B, 122A, 122B, 122C, 122D); and
transmitting, by the elevator system node (106A, 106B, 108A, 108B, 122A, 122B, 122C, 122D), the configuration data to the landing node (114A, 114B, 114C, 114D, 124A, 124B, 126A, 126B, 126C, 126D) to set up the landing node (114A, 114B, 114C, 114D, 124A, 124B, 126A, 126B, 126C, 126D).

2. The method of claim 1, wherein the ethernet bus (102, 132) comprises a plurality of point to point ethernet bus segments linked together with at least one repeating element (136).

3. The method of any of claims 1 - 2, further comprising:
communicating, from the elevator system node (106A, 106B, 108A, 108B, 122A, 122B, 122C, 122D), operational characteristics and a physical address of the landing node (114A, 114B, 114C, 114D, 124A, 124B, 126A, 126B, 126C, 126D) or a component associated with the landing node (114A, 114B, 114C, 114D, 124A, 124B, 126A, 126B, 126C, 126D) to the controller (100).

4. An elevator communication system, comprising:
an ethernet bus (102, 132);
a controller (100) communicatively connected to the ethernet bus (102, 132) and being configured to communicate via the ethernet bus (102, 132);
a plurality of elevator system nodes (106A, 106B, 108A, 108B, 122A, 122B, 122C, 122D) communicatively connected to the ethernet bus (102, 132) and being configured to communicate via the ethernet bus (102, 132), wherein each elevator system node (106A, 106B, 108A, 108B, 122A, 122B, 122C, 122D) is associated with a respective landing;
a landing multi-drop or point-to-point ethernet bus segment (116A, 116B, 118A, 118B, 128A, 128B, 128C, 128D, 138A, 138B) at each landing, the landing multi-drop or point-to-point ethernet bus segment (116A, 116B, 118A, 118B, 128A, 128B, 128C, 128D, 138A, 138B) being connected to the elevator system node (106A, 106B, 108A, 108B, 122A, 122B, 122C, 122D) associated with the landing;
landing nodes (114A, 114B, 114C, 114D, 124A, 124B, 126A, 126B, 126C, 126D) at each landing connected to a respective landing multi-drop or point-to-point ethernet bus segment (116A, 116B, 118A, 118B, 128A, 128B, 128C, 128D, 138A, 138B), wherein the landing node (114A, 114B, 114C, 114D, 124A, 124B, 126A, 126B, 126C, 126D) comprises one of a display, a destination call panel, a car call button, a safety contact, a voice intercom system, and a camera;
wherein each elevator system node of the plurality of elevator system nodes (106A, 106B, 108A, 108B, 122A, 122B, 122C, 122D) is provided with a connecting unit (120A-120D, 134A, 134D, 140A, 140B) to enable communication between the ethernet bus (102, 132) and the respective landing multi-drop or point-to-point ethernet bus segment (116A, 116B, 118A, 118B, 128A, 128B, 128C, 128D, 138A, 138B);
wherein the elevator system node (106A, 106B, 108A, 108B, 122A, 122B, 122C, 122D) is configured to communicate to the controller (100) identification data of a landing node (114A, 114B, 114C, 114D, 124A, 124B, 126A, 126B, 126C, 126D) connected to the elevator system node (106A, 106B, 108A, 108B, 122A, 122B, 122C, 122D);
wherein the controller (100) is configured to generate configuration data based on the identification data and to transmit the configuration data to the elevator system node (106A, 106B, 108A, 108B, 122A, 122B, 122C, 122D); and
wherein the elevator system node (106A, 106B, 108A, 108B, 122A, 122B, 122C, 122D) is configured to transmit the configuration data to the landing node (114A, 114B, 114C, 114D, 124A, 124B, 126A, 126B, 126C, 126D) to set up the landing node (114A, 114B, 114C, 114D, 124A, 124B, 126A, 126B, 126C, 126D).

5. The elevator communication system of claim 4, wherein the ethernet bus (132) comprises a plurality of point to point ethernet bus segments linked together with at least one repeating element (136).

## Patentansprüche

1. Verfahren zum Einrichten eines Aufzugskommunikationssystems, umfassend:
einen Ethernet-Bus (102, 132);
einen Controller (100), der mit dem Ethernet-Bus (102, 132) in Kommunikationsverbindung steht und konfiguriert ist, über den Ethernet-Bus (102, 132) zu kommunizieren;
eine Vielzahl von Aufzugssystemknoten (106A, 106B, 108A, 108B, 122A, 122B, 122C, 122D), die mit dem Ethernet-Bus (102, 132) in Kommunikationsverbindung stehen und konfiguriert sind, über den Ethernet-Bus (102, 132) zu kommunizieren, wobei jeder Aufzugssystemknoten (106A, 106B, 108A, 108B, 122A, 122B, 122C, 122D) einem jeweiligen Stockwerk zugeordnet ist;
ein Stockwerk Multi-Drop- oder Punkt-zu-Punkt-Ethernet-Bus-Segment (116A, 116B, 118A, 118B, 128A, 128B, 128C, 128D, 138A, 138B) an jedem Stockwerk, wobei das Stockwerk Multi-Drop- oder Punkt-zu-Punkt-Ethernet-Bus-Segment (116A, 116B, 118A, 118B, 128A, 128B, 128C, 128D, 138A, 138B) mit dem Aufzugssystemknoten (106A, 106B, 108A, 108B, 122A, 122B, 122C, 122D) verbunden ist, der dem Stockwerk zugeordnet ist;
Stockwerkknoten (114A, 114B, 114C, 114D, 124A, 124B, 126A, 126B, 126C, 126D) an jedem Stockwerk, die mit einem jeweiligen Stockwerk Multi-Drop- oder Punkt-zu-Punkt-Ethernet-Bus-Segment (116A, 116B, 118A, 118B, 128A, 128B, 128C, 128D, 138A, 138B) verbunden sind, wobei der Stockwerkknoten (114A, 114B, 114C, 114D, 124A, 124B, 126A, 126B, 126C, 126D) eines der folgenden umfasst: ein Display, ein Zielrufpanel, einen Fahrtrufknopf, einen Sicherheitskontakt, eine Intercom-Sprechanlage, und eine Kamera;
wobei jeder Aufzugssystemknoten der Vielzahl von Aufzugssystemknoten (106A, 106B, 108A, 108B, 122A, 122B, 122C, 122D) mit einer Verbindungseinheit (120A-120D, 134A, 134D, 140A, 140B) ausgestattet ist, um eine Kommunikation zwischen dem Ethernet-Bus (102, 132) und dem jeweiligen Stockwerk Multi-Drop- oder Punkt-zu-Punkt-Ethernet-Bus-Segment (116A, 116B, 118A, 118B, 128A, 128B, 128C, 128D, 138A, 138B) zu ermöglichen,
wobei das Verfahren umfasst:
Verbinden eines Stockwerkknotens (114A, 114B, 114C, 114D, 124A, 124B, 126A, 126B, 126C, 126D) mit einem Aufzugssystemknoten (106A, 106B, 108A, 108B, 122A, 122B, 122C, 122D) über ein jeweiliges Stockwerk Multi-Drop- oder Punkt-zu-Punkt-Ethernet-Bus-Segment (116A, 116B, 118A, 118B, 128A, 128B, 128C, 128D, 138A, 138B);
Kommunizieren von Identifikationsdaten des Stockwerkknotens (114A, 114B, 114C, 114D, 124A, 124B, 126A, 126B, 126C, 126D) durch den Aufzugssystemknoten (106A, 106B, 108A, 108B, 122A, 122B, 122C, 122D) an den Controller (100);
Erzeugen von Konfigurationsdaten durch den Controller (100) basierend auf den Identifikationsdaten;
Übertragen der Konfigurationsdaten durch den Controller (100) an den Aufzugssystemknoten (106A, 106B, 108A, 108B, 122A, 122B, 122C, 122D); und
Übertragen der Konfigurationsdaten durch den Aufzugssystemknoten (106A, 106B, 108A, 108B, 122A, 122B, 122C, 122D) an den Stockwerkknoten (114A, 114B, 114C, 114D, 124A, 124B, 126A, 126B, 126C, 126D), um den Stockwerkknoten (114A, 114B, 114C, 114D, 124A, 124B, 126A, 126B, 126C, 126D) einzurichten.

2. Verfahren nach Anspruch 1, wobei der Ethernet-Bus (102, 132) eine Vielzahl von Punkt-zu-Punkt-Ethernet-Bussegmenten umfasst, die mit mindestens einem Wiederholungselement (136) untereinander verbunden sind.

3. Verfahren nach einem der Ansprüche 1 bis 2, das ferner umfasst: Übermitteln von dem Aufzugssystemknoten (106A, 106B, 108A, 108B, 122A, 122B, 122C, 122D) Betriebseigenschaften und einer physikalischen Adresse des Stockwerkknotens (114A, 114B, 114C, 114D, 124A, 124B, 126A, 126B, 126C, 126D) oder einer mit dem Stockwerkknoten (114A, 114B, 114C, 114D, 124A, 124B, 126A, 126B, 126C, 126D) verbundenen Komponente an den Controller (100).

4. Aufzugskommunikationssystem, umfassend:
einen Ethernet-Bus (102, 132);
einen Controller (100), der mit dem Ethernet-Bus (102, 132) in Kommunikationsverbindung steht und konfiguriert ist, über den Ethernet-Bus (102, 132) zu kommunizieren;
eine Vielzahl von Aufzugssystemknoten (106A, 106B, 108A, 108B, 122A, 122B, 122C, 122D), die mit dem Ethernet-Bus (102, 132) in Kommunikationsverbindung stehen und konfiguriert sind, über den Ethernet-Bus (102, 132) zu kommunizieren, wobei jeder Aufzugssystemknoten (106A, 106B, 108A, 108B, 122A, 122B, 122C, 122D) einem jeweiligen Stockwerk zugeordnet ist;
ein Stockwerk Multi-Drop- oder Punkt-zu-Punkt-Ethernet-Bus-Segment (116A, 116B, 118A, 118B, 128A, 128B, 128C, 128D, 138A, 138B) an jedem Stockwerk, wobei das Stockwerk Multi-Drop- oder Punkt-zu-Punkt-Ethernet-Bus-Segment (116A, 116B, 118A, 118B, 128A, 128B, 128C, 128D, 138A, 138B) mit dem Aufzugsystemknoten (106A, 106B, 108A, 108B, 122A, 122B, 122C, 122D) verbunden ist, der dem Stockwerk zugeordnet ist;
Stockwerkknoten (114A, 114B, 114C, 114D, 124A, 124B, 126A, 126B, 126C, 126D) an jedem Stockwerk, die mit einem jeweiligen Stockwerk Multi-Drop- oder Punkt-zu-Punkt-Ethernet-Bus-Segment (116A, 116B, 118A, 118B, 128A, 128B, 128C, 128D, 138A, 138B) verbunden sind, wobei der Stockwerkknoten (114A, 114B, 114C, 114D, 124A, 124B, 126A, 126B, 126C, 126D) eines der folgenden umfasst: ein Display, ein Zielrufpanel, einen Fahrtrufknopf, einen Sicherheitskontakt, eine Intercom-Sprechanlage und eine Kamera;
wobei jeder Aufzugssystemknoten der Vielzahl von Aufzugssystemknoten (106A, 106B, 108A, 108B, 122A, 122B, 122C, 122D) mit einer Verbindungseinheit (120A-120D, 134A, 134D, 140A, 140B) ausgestattet ist, um eine Kommunikation zwischen dem Ethernet-Bus (102, 132) und dem jeweiligen Stockwerk Multi-Drop- oder Punkt-zu-Punkt-Ethernet-Bussegment (116A, 116B, 118A, 118B, 128A, 128B, 128C, 128D, 138A, 138B) zu ermöglichen;
wobei der Aufzugssystemknoten (106A, 106B, 108A, 108B, 122A, 122B, 122C, 122D) dazu konfiguriert ist, Identifikationsdaten eines Stockwerkknotens (114A, 114B, 114C, 114D, 124A, 124B, 126A, 126B, 126C, 126D), der mit dem Aufzugssystemknoten (106A, 106B, 108A, 108B, 122A, 122B, 122C, 122D) verbunden ist, zu übermitteln;
wobei der Controller (100) konfiguriert ist, auf Grundlage der Identifikationsdaten Konfigurationsdaten zu erzeugen und die Konfigurationsdaten an den Aufzugssystemknoten (106A, 106B, 108A, 108B, 122A, 122B, 122C, 122D) zu übertragen; und
wobei der Aufzugssystemknoten (106A, 106B, 108A, 108B, 122A, 122B, 122C, 122D) konfiguriert ist, die Konfigurationsdaten an den Stockwerkknoten (114A, 114B, 114C, 114D, 124A, 124B, 126A, 126B, 126C, 126D) zu übertragen, um den Stockwerkknoten (114A, 114B, 114C, 114D, 124A, 124B, 126A, 126B, 126C, 126D) einzurichten.

5. Aufzugskommunikationssystem nach Anspruch 4, wobei der Ethernet-Bus (132) eine Vielzahl von Punkt-zu-Punkt-Ethernet-Bus-Segmenten umfasst, die mit mindestens einem Wiederholungselement (136) untereinander verbunden sind.

## Revendications

1. Procédé de configuration d'un système de communication d'ascenseur comprenant
un bus Ethernet (102, 132) ;
un dispositif de commande (100) connecté en communication au bus Ethernet (102, 132) et étant configuré pour communiquer par l'intermédiaire du bus Ethernet (102, 132) ;
une pluralité de nœuds de système d'ascenseur (106A, 106B, 108A, 108B, 122A, 122B, 122C, 122D) connectés en communication au bus Ethernet (102, 132) et étant configurés pour communiquer par l'intermédiaire du bus Ethernet (102, 132), dans lequel chaque nœud de système d'ascenseur (106A, 106B, 108A, 108B, 122A, 122B, 122C, 122D) est associé à un palier respectif ;
un segment de bus Ethernet multi-drop ou point à point de palier (116A, 116B, 118A, 118B, 128A, 128B, 128C, 128D, 138A, 138B) au niveau de chaque palier, le segment de bus Ethernet multi-drop ou point à point de palier (116A, 116B, 118A, 118B, 128A, 128B, 128C, 128D, 138A, 138B) étant connecté au nœud de système d'ascenseur (106A, 106B, 108A, 108B, 122A, 122B, 122C, 122D) associé au palier ;
des nœuds de palier (114A, 114B, 114C, 114D, 124A, 124B, 126A, 126B, 126C, 126D) au niveau de chaque palier connecté à un segment de bus Ethernet multi-drop ou point à point de palier (116A, 116B, 118A, 118B, 128A, 128B, 128C, 128D, 138A, 138B) respectif,
dans lequel le nœud de palier (114A, 114B, 114C, 114D, 124A, 124B, 126A, 126B, 126C, 126D) comprend un d'un afficheur, d'un panneau d'appel de destination, d'un bouton d'appel de cabine, d'un contact de sécurité, d'un système d'interphone vocal, et d'une caméra ;
dans lequel chaque nœud de système d'ascenseur de la pluralité de nœuds de système d'ascenseur (106A, 106B, 108A, 108B, 122A, 122B, 122C, 122D) est fourni avec une unité de connexion (120A-120D, 134A, 134D, 140A, 140B) pour permettre une communication entre le bus Ethernet (102, 132) et le segment de bus Ethernet multi-drop ou point à point de palier (116A, 116B, 118A, 118B, 128A, 128B, 128C, 128D, 138A, 138B) respectif, dans lequel le procédé comprend :
la connexion d'un nœud de palier (114A, 114B, 114C, 114D, 124A, 124B, 126A, 126B, 126C, 126D) à un nœud de système d'ascenseur (106A, 106B, 108A, 108B, 122A, 122B, 122C, 122D) par l'intermédiaire d'un segment de bus Ethernet multi-drop ou point à point de palier (116A, 116B, 118A, 118B, 128A, 128B, 128C, 128D, 138A, 138B) respectif ;
la communication, par le nœud de système d'ascenseur (106A, 106B, 108A, 108B, 122A, 122B, 122C, 122D), de données d'identification du nœud de palier (114A, 114B, 114C, 114D, 124A, 124B, 126A, 126B, 126C, 126D) au dispositif de commande (100) ;
la génération, par le dispositif de commande (100), de données de configuration sur la base des données d'identification ;
la transmission, par le dispositif de commande (100), des données de configuration au nœud de système d'ascenseur (106A, 106B, 108A, 108B, 122A, 122B, 122C, 122D) ; et
la transmission, par le nœud de système d'ascenseur (106A, 106B, 108A, 108B, 122A, 122B, 122C, 122D), des données de configuration au nœud de palier (114A, 114B, 114C, 114D, 124A, 124B, 126A, 126B, 126C, 126D) pour configurer le nœud de palier (114A, 114B, 114C, 114D, 124A, 124B, 126A, 126B, 126C, 126D).

2. Procédé selon la revendication 1, dans lequel le bus Ethernet (102, 132) comprend une pluralité de segments de bus Ethernet point à point liés ensemble à au moins un élément répétitif (136).

3. Procédé selon l'une quelconque des revendications 1 à 2, comprenant en outre :
la communication, à partir du nœud de système d'ascenseur (106A, 106B, 108A, 108B, 122A, 122B, 122C, 122D), de caractéristiques opérationnelles et d'une adresse physique du nœud de palier (114A, 114B, 114C, 114D, 124A, 124B, 126A, 126B, 126C, 126D) ou d'un composant associé au nœud de palier (114A, 114B, 114C, 114D, 124A, 124B, 126A, 126B, 126C, 126D) au dispositif de commande (100).

4. Système de communication d'ascenseur, comprenant :
un bus Ethernet (102, 132) ;
un dispositif de commande (100) connecté en communication au bus Ethernet (102, 132) et étant configuré pour communiquer par l'intermédiaire du bus Ethernet (102, 132) ;
une pluralité de nœuds de système d'ascenseur (106A, 106B, 108A, 108B, 122A, 122B, 122C, 122D) connectés en communication au bus Ethernet (102, 132) et étant configurés pour communiquer par l'intermédiaire du bus Ethernet (102, 132), dans lequel chaque nœud de système d'ascenseur (106A, 106B, 108A, 108B, 122A, 122B, 122C, 122D) est associé à un palier respectif ;
un segment de bus Ethernet multi-drop ou point à point de palier (116A, 116B, 118A, 118B, 128A, 128B, 128C, 128D, 138A, 138B) au niveau de chaque palier, le segment de bus Ethernet multi-drop ou point à point de palier (116A, 116B, 118A, 118B, 128A, 128B, 128C, 128D, 138A, 138B) étant connecté au nœud de système d'ascenseur (106A, 106B, 108A, 108B, 122A, 122B, 122C, 122D) associé au palier ;
des nœuds de palier (114A, 114B, 114C, 114D, 124A, 124B, 126A, 126B, 126C, 126D) au niveau de chaque palier connecté à un segment de bus Ethernet multi-drop ou point à point de palier (116A, 116B, 118A, 118B, 128A, 128B, 128C, 128D, 138A, 138B) respectif,
dans lequel le nœud de palier (114A, 114B, 114C, 114D, 124A, 124B, 126A, 126B, 126C, 126D) comprend un d'un afficheur, d'un panneau d'appel de destination, d'un bouton d'appel de cabine, d'un contact de sécurité, d'un système d'interphone vocal, et d'une caméra ;
dans lequel chaque nœud de système d'ascenseur de la pluralité de nœuds de système d'ascenseur (106A, 106B, 108A, 108B, 122A, 122B, 122C, 122D) est fourni avec une unité de connexion (120A-120D, 134A, 134D, 140A, 140B) pour permettre une communication entre le bus Ethernet (102, 132) et le segment de bus Ethernet multi-drop ou point à point de palier (116A, 116B, 118A, 118B, 128A, 128B, 128C, 128D, 138A, 138B) respectif ;
dans lequel le nœud de système d'ascenseur (106A, 106B, 108A, 108B, 122A, 122B, 122C, 122D) est configuré pour communiquer au dispositif de commande (100) des données d'identification d'un nœud de palier (114A, 114B, 114C, 114D, 124A, 124B, 126A, 126B, 126C, 126D) connecté au nœud de système d'ascenseur (106A, 106B, 108A, 108B, 122A, 122B, 122C, 122D) ;
dans lequel le dispositif de commande (100) est configuré pour générer des données de configuration sur la base des données d'identification et pour transmettre les données de configuration au nœud de système d'ascenseur (106A, 106B, 108A, 108B, 122A, 122B, 122C, 122D) ; et
dans lequel le nœud de système d'ascenseur (106A, 106B, 108A, 108B, 122A, 122B, 122C, 122D) est configuré pour transmettre les données de configuration au nœud de palier (114A, 114B, 114C, 114D, 124A, 124B, 126A, 126B, 126C, 126D) pour configurer le nœud de palier (114A, 114B, 114C, 114D, 124A, 124B, 126A, 126B, 126C, 126D).

5. Système de communication d'ascenseur selon la revendication 4, dans lequel le bus Ethernet (132) comprend une pluralité de segments de bus Ethernet point à point liés ensemble à au moins un élément répétitif (136).
